# EUROPÄISCHE PATENTANMELDUNG

(11) **EP 0 744 282 A1**
(43) Veröffentlichungstag der Anmeldung: **27.11.1996**
(21) Anmeldenummer: 96108219.5
(22) Anmeldetag: 23.05.1996
(51) Int. Cl.: B32B 21/13

(54) **Plattenwerkstoff aus zwei, drei oder mehr verleimten Holzschichten**

(30) Priorität: 26.05.1995 AT 883/95
(71) Anmelder: Hirnsperger, Rupert, 5321 Koppl (AT)
(72) Erfinder: Hirnsperger, Rupert, 5321 Koppl (AT)
(74) Vertreter: von Willich, Werner, Dipl.-Phys.

(57) **Zusammenfassung**

Die Erfindung schafft einen Plattenwerkstoff, der die höhere Formstabilität gesperrten Holzes mit dem optischen Eindruck von Holzpaneelen verbindet. Dazu werden die Holzschichten (1) in gleicher Richtung ausgelegt und in eine oder mehrere der Leimfugen (3) Strahlen (2), das sind lange Stäbchen, eingebracht, die beim Verleimen unter Druck in die jeweilig benachbarten Holzschichten eingedrückt werden. Dabei sind die Strahlen (2) vorzugsweise quer zur Längsrichtung in der Leimfugenebene angeordnet.

## Beschreibung

Die Erfindung betrifft einen Plattenwerkstoff aus zwei, drei oder mehr verleimten Holzschichten. Solche Plattenwerkstoffe sind als Massivholzplatten, Sperrholzplatten, Tischler- oder Paneelplatten, Dreischichtplatten usw. bekannt.

Bei den bekannten Platten ist es nachteilig, daß diese entweder keine hinreichende Formstabilität aufweisen (wenig Querstabilität und ungehindertes Schwinden und Quellen bei Feuchtigkeitsschwankungen bei Massivholzplatten aus in der Breite verleimten Brettern), oder durch die Sperrung (quer liegende Mittellage bei der Dreischichtplatte) an den Kanten einen unbefriedigenden Anblick bieten. Ferner ist auch die Formstabilität, insbesondere das Stehvermögen, der gesperrten Platten durchaus noch verbesserungsbedürftig.

Aufgabe der Erfindung ist es daher, einen Plattenwerkstoff der angegeben Gattung zu schaffen, der sich durch hohe Formstabilität bei möglichst großer optischer Ähnlichkeit zum Holzpaneel auszeichnet.

Dies wird erfindungsgemäß dadurch erreicht, daß die Holzschichten in gleicher oder annähernd gleicher Richtung ausgerichtet sind und in einer oder mehreren Leimfugen dünne, schmale, aber möglichst lange Stäbchen ("(Holz-) Strahlen") zur Gänze, durch entsprechenden Druck, in die Holzschichten eingepreßt und eingeleimt sind.

Die Bezeichnung "(Holz)strahlen" soll an die Holzstrahlen (Markstrahlen) des gewachsenen Holzes erinnern. Jedoch wird nachfolgend meistens nur der Ausdruck "Strahlen" verwendet, da diese, wie nachfolgend noch ausgeführt, nicht notwendig aus Holz bestehen müssen.

Es ist zu betonen, daß diese Strahlen ohne Vorfräsung in die Holzschichten eingepreßt und eingeleimt werden.

Die Vorteile der Erfindung liegen insbesondere in Folgendem: Bisher war bei massiven (Holz-)Mehrschichtplatten dann, wenn zur Erhöhung der Formstabilität eine Sperrung vorgenommen wurde, an jeder der Kanten Hirnholz sichtbar. Dadurch waren solche Mehrschichtplatten ohne weiteres erkennbar (oder die Kanten mußten gesondert abgedeckt werden). Die erfindungsgemäßen bzw. nach dem erfindungsgemäßen Verfahren hergestellten Plattenwerkstoffe bieten weitestgehend das natürliche Erscheinungsbild des Holzes.

Bei nicht gesperrten Plattenwerkstoffen war jedoch eine hinreichende Formstabilität nicht erzielbar.

Mit der erfindungsgemäßen Lösung ist es auch erstmalig möglich, einen formstabilen Plattenwerkstoff mit einer geraden Zahl von Holzschichten, insbesondere auch nur zwei Holzschichten, zu erzeugen. Dies ist dazu noch in dünner Ausführung (z.B. 7 mm) möglich. Für Rückwände und Füllungen im Möbelbau ist eine geringere Biegefestigkeit in Querrichtung der Platte (Breite) kein Problem, da diese Möbelbestandteile entweder am Korpus befestigt oder in Nuten stabilisiert sind. Dafür ist die Platte in materialsparender, dünner zweischichtiger Ausführung besonders geeignet. Die zweischichtige Platte gemäß der Erfindung ist auch für Möbel- und Türfüllungen bestens geeignet, da das Schwinden und Quellen der Platte auch hier durch die Stahlen bis auf ein unbedeutendes Maß unterbunden ist.

Die Stückzahl, Dimension und Beschaffenheit der Strahlen ist den unterschiedlich dimensionierten Massivholzplattenwerkstoffen in Hinblick auf das Erreichen eines formstabilen Produktes (schwinden, quellen, werfen usw.) angepaßt.

Es ist auch ersichtlich, daß mit dem erfindungsgemäßen Verfahren bzw. Erzeugnis auch strahlarmierte Platten nicht nur in ebener Form sondern auch konvexer bzw. konkaver Form (bombiert) parallel zur Faser hergestellt werden können bzw. geschaffen sind. Diese sind für konvexe und konkave Möbelfronten u.a.m. einsetzbar.

Bevorzugt sind die Strahlen im wesentlichen quer zur Längsrichtung der Holzschichten angeordnet.

Die Anordnung der Strahlen braucht nicht notwendig quer zur Längsrichtung (d.i. die Längsrichtung der Holzlamellen) zu sein, vor allem können die Strahlen auch unterschiedliche Richtungen aufweisen, z.B. beim Herstellungsvorgang einfach "aufgestreut" sein. Jedoch ist eine Anordnung in Querrichtung bevorzugt, da für diese Richtung vor allem eine Maßnahme gegen Verzug bzw. Schwinden und Quellen erforderlich ist.

Die Länge der Strahlen erstreckt sich bevorzugt und möglichst über die gesamte Plattenbreite (z.B. das Normmaß von 205 cm). Die Strahlen können auch vor dem Aufbringungsvorgang zu netzartigen Matten zusammengefügt sein, um die Aufbringung zu rationalisieren. Wird bei dem Herstellungsverfahren das Aufstreuen gewählt, so können die Strahlen auch kürzer sein, um den Aufstreuvorgang zu erleichtern. Kleinere Unregelmäßigkeiten bei der Aufbringung der Strahlen spielen keine Rolle, das Gesamtbild muß allerdings gleichmäßig sein, um einen unterschiedlichen Verzug der Platte zu verhindern.

Der Strahlenquerschnitt muß auf die Beanspruchung abgestimmt sein. Er liegt bevorzugt im Bereich von 5 bis 20 mm².

Bevorzugt ist der Strahlenquerschnitt rautenförmig.

Beim erfindungsgemäßen Herstellungsverfahren werden die Strahlen in die Leimfugen eingebracht und dort unter entsprechendem Druck, gleichzeitig mit der Verleimung der Holzschichten, in die Holzschichten eingepreßt. Diese Einpressung, die natürlich nicht "auftragen" soll, also eine äußere Verformung der Schichten nicht bewirken soll, gelingt besonders gut mit Strahlen mit rautemförmigen Querschnitt, zumindest an den strahlenabgewandten Seiten, da sich diese in die darüber- bzw. darunterliegende Holzschicht gut einpressen, sich unter dem Druck von selbst im Querschnitt ausrichten, und eine große Leimfläche aufweisen.

Bevorzugt werden die Strahlen oder die aus ihnen gebildeten Matten schon vor dem Einbringen in die Leimfuge mit Leim benetzt, bevorzugt satt bespritzt. Dann ist es nicht mehr erforderlich, die Holzschichten selber zu beleimen.

Die Verleimung erfolgt unter so hohem Druck (je nach Materialien bevorzugt und bspw. ca. 7 bis 20 bar), daß die Strahlen ganz in die Lamellen der Außen- bzw. Mittelschichten eingedrückt werden. Es ist wichtig, daß in den Bereichen, auf die keine Strahlen zu liegen kommen, Längsholz an Längsholz der Lamellen verleimt ist bzw. wird.

Der Flächenanteil der Strahlen ist auf die Dimension und Holzart der zu produzierenden Massivholzplatte abgestimmt. Der Flächenanteil der Strahlen an der jeweiligen Leimfuge beträgt vorzugsweise 5 bis 35%, besonders bevorzugt 20 bis 25%.

Es hat sich auch herausgestellt, daß die Querstabilität, und hier vor allem die Biege- und Knickfestigkeit der Breite nach, bei dreischichtigen Platten erhöht ist, wenn die Mittellage eher dicker hergestellt wird, damit sich der Knickwinkel durch den größeren Abstand der Strahlen erhöht.

Bevorzugt bestehen die Strahlen aus schmal aufgetrennten Furnieren. Diese tragen ebenfalls nicht auf, geben aber die notwendige Festigkeit.

Bevorzugt bestehen einige oder alle der Strahlen aus, vorzugsweise nicht abhölzigem, also geradwüchsigem, Holz. Dadurch wird, bei ausreichender Festigkeit, ein durchgehend als Holzwerkstoff zu bezeichnendes Erzeugnis geschaffen. Das Holz sollte gut und fest sein und, um Abhölzigkeit zu verhindern, vorwiegend in der Längsfaser gespalten sein. Besonders gut hat sich bei Fichtenholzplatten auch festes, weißes Eschenholz, das stabil und zähe ist, als Strahl bewährt.

Bevorzugt bestehen einige oder alle der Strahlen aus Schilf und oder Bambus. Diese Materialien, die ebenfalls aus natürlichen Rohstoffen bestehen, haben sich ebenfalls bewährt.

Bevorzugt bestehen einige oder alle der Strahlen aus trockenen, zugfesten, verholzten Gräsern und/oder Hanf. Hierfür gilt das eben gesagte.

Bevorzugt bestehen einige oder alle der Strahlen aus verstärkten Papieren. Auch für dieses Material gilt das eben Gesagte.

Bevorzugt bestehen einige oder alle der Strahlen aus Kunststoffen und/oder Kohlefasern und/oder Glasfibern. Dadurch ist es möglich, auch besondere Anforderungen zu erfüllen.

Bevorzugt bestehen einige oder alle der Strahlen aus Metall. Diese liegen bevorzugt in Gitterform vor.

Nachfolgend wird die Erfindung anhand eines bevorzugten Ausführungsbeispiels unter Bezugnahme auf die beigefügten Zeichnungen, auf die wegen ihrer großen Klarheit und Übersichtlichkeit hinsichtlich der Offenbarung ausdrücklich verwiesen wird, noch näher erläutert. Es zeigen:
Fig. 1.1.: eine schematische teilweise Schrägansicht einer erfindungsgemäßen zweischichtigen Holzstrahlplatte;
Fig. 1.2.: eine schematische teilweise Schrägansicht einer erfindungsgemäßen dreischichtigen Holzstrahlplatte.
Fig. 1.3.: eine schematische teilweise Schrägansicht einer erfindungsgemäßen vierschichtigen Holzstrahlplatte.
Fig. 2: eine erfindungsgemäßige dreischichtige Holzstrahlplatte, bombiert.
Fig. 3: Beispiele für Querschnittsformen des Strahles.

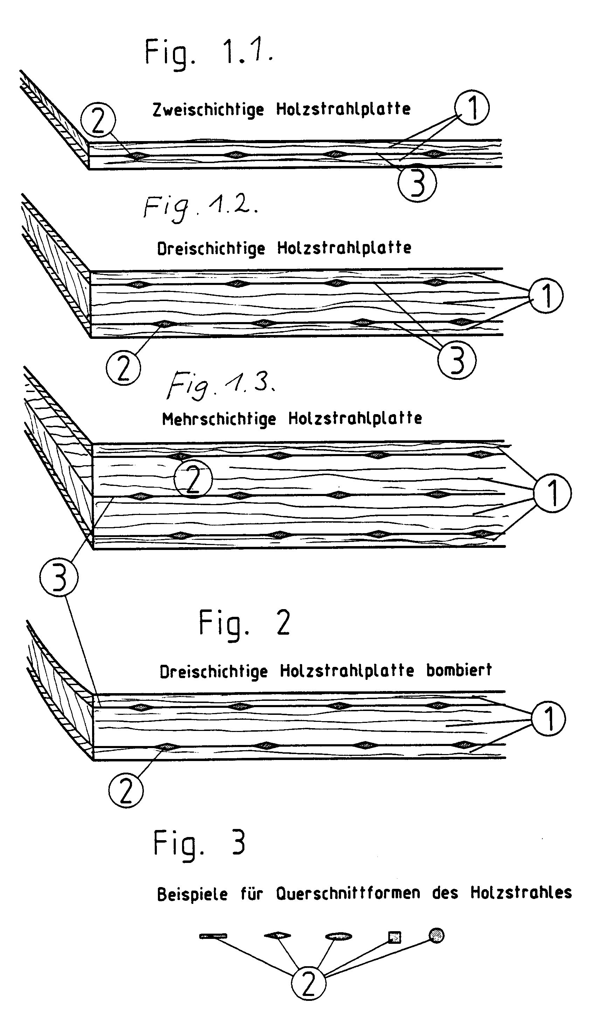

Fig. 1.1. zeigt eine Holzstrahlplatte aus zwei Holzschichten (jeweils mit 1 bezeichnet) die bei der Herstellung der Platte in gleicher Richtung ausgerichtet wurden, wie am Stirnholz links erkennbar ist. Zwischen die Schichten wurden, im Ausführungsbeispiel (Holz-), Strahlen eingelegt, im Ausführungsbeispiel parallel, im gleichen Abstand und möglichst rechtwinkelig (wie bevorzugt) zur Längserstreckung der Holzschichten. Die Strahlen haben einen rautenförmigen Querschnitt, wodurch sie sich in der aus Fig. 1.1. ersichtlichen Weise in die Schichten einpressen, aber ohne das dies an den Oberflächen auch dünnerer Schichten erkennbar ist. Die Kanten werden ggfs. noch, z.B. durch Hobeln und Schleifen, so bearbeitet, daß sich eine einheitliche Fläche ergibt. Die Holzstrahlen wirken dann eher wie Ästchen und beeinträchtigen das natürliche Bild der Platte kaum.

Die Strahlen wurden, wie bevorzugt, spanfrei von astreinem gutem Holz herausgeschnitten. Faktoren der Abstimmung der Querschnittsgröße und -form sind die Zugfestigkeit der Strahlen, ihre Anzahl pro Plattenlaufmeter, der zur Verfügung stehende Preßdruck, um sie auch zur Gänze einzupressen, die Holzart des Holzstrahles und des Plattenwerkstoffes, die Kräfte die notwendig sind, um das Schwinden und Quellen des Plattenwerkstoffes zu unterbinden und ihm Formstabilität zu verleihen. Bevorzugte Parameter wurden schon oben angegeben.

Im Ausführungsbeispiel wurden die Strahlen zu einer Matte maschinell verknüpft oder verklebt, wodurch sich ein gleichmäßiger Abstand leicht erzielen läßt, und die Presse sich gut beschicken läßt.

Im Übrigen ist das Herstellungsverfahren analog zu dem der üblichen Schichtholzplattenerzeugung, d. h. die Platte wird noch akklimatisiert, beschnitten und geschliffen und ist dann handeisfertig.

Die Holzstrahlen weisen beispielsweise eine Zugfestigkeit von ca. 65 kg auf.

In Fig. 1.2. bzw. 1.3. sind eine drei- bzw. vierschichtige Holzstrahlplatte gezeigt. Dort sind in jeder der Leimfugen Holzstrahlen in der oben geschilderten Weise eingebracht.

Fig. 2 zeigt eine dreischichtige Holzstrahlplatte, die bombiert ist. Auch hier bezeichnen die Bezugsziffern 1 die Schichten, 2 die Strahlen und 3 die Leimfugen.

Fig. 3 zeigt Beispiele zur Querschnittsformen der Strahlen, insbesondere Holzstrahlen.

Der erfindungsgemäße Plattenwerkstoff ist für alle herkömmlichen Einsatzbereiche, nämlich den Möbelbau, als Konstruktionsplatte, als Türblatt, als Stiegenauftritt und als Formplatte geeignet.

## Patentansprüche

1. Plattenwerkstoff aus zwei, drei oder mehr verleimten Holzschichten,
**dadurch gekennzeichnet,** daß
die Holzschichten (1) in gleicher oder annähernd gleicher Richtung ausgerichtet sind und in einer oder mehreren Leimfugen (3) dünne, schmale, aber möglichst lange Stäbchen (2) ("(Holz)strahlen") zur Gänze, durch entsprechenden Druck, in die Holzschichten (1) eingepreßt und eingeleimt sind.

2. Plattenwerkstoff nach Anspruch 1, dadurch gekennzeichnet, daß
die Strahlen (2) im wesentlichen quer zur Längsrichtung der Holzschichten (1) angeordnet sind.

3. Plattenwerkstoff nach Anspruch 1 oder 2, dadurch gekennzeichnet, daß
der Strahlenquerschnitt (2) rautenförmig ist.

4. Plattenwerkstoff nach einem der Ansprüche 1 - 3, dadurch gekennzeichnet, daß
die Strahlen aus schmal aufgetrennten Furnieren bestehen.

5. Plattenwerkstoff nach einem der Ansprüche 1 - 4, dadurch gekennzeichnet, daß
einige oder alle der Strahlen (2) aus, vorzugsweise geradwüchsigem, Holz bestehen.

6. Plattenwerkstoff nach einem der Ansprüche 1 - 4, dadurch gekennzeichnet, daß
einige oder alle der Strahlen aus Schilf und/oder Bambus bestehen.

7. Plattenwerkstoff nach einem der Ansprüche 1 - 4, dadurch gekennzeichnet, daß
einige oder alle der Strahlen aus trockenen, zugfesten, verholzten Gräsern und/oder Hanf bestehen.

8. Plattenwerkstoff nach einem der Ansprüche 1 - 4, dadurch gekennzeichnet, daß
einige oder alle der Strahlen aus verstärkten Papieren bestehen.

9. Plattenwerkstoff nach einem der Ansprüche 1 - 4, dadurch gekennzeichnet, daß
einige oder alle der Strahlen aus Kunststoffen und/oder Kohlefasern und/oder Glasfibern bestehen.

10. Verfahren zur Herstellung eines Plattenwerkstoffes aus zwei, drei, oder mehr verleimten Holzschichten, **dadurch gekennzeichnet,** daß
die Holzschichten in gleicher oder annähernd gleicher Richtung ausgerichtet werden und in eine oder mehrere der Leimfugen zwischen den Holzschichten dünne, schmale aber möglichst lange Stäbchen ("(Holzstrahlen)") einzeln oder in Mattenform eingelegt oder eingestreut werden, und die Holzschichten dann unter einem Druck, der die Strahlen in die Holzschichten einpreßt, verleimt werden.
